# EUROPEAN PATENT APPLICATION

(11) **EP 4 635 667 A1**
(43) Date of publication of application: **22.10.2025**
(21) Application number: 24210280.4
(22) Date of filing: 31.10.2024
(51) Int. Cl.: B23K 9/29, B23K 9/32

(54) **TEACHING TIP AND WELDING ROBOT WITH THE SAME MOUNTED THEREON**

(30) Priority: 19.04.2024 JP 2024068656
(71) Applicant: DAIHEN Corporation, Yodogawa-ku Osaka-shi, Osaka 532-8512 (JP)
(72) Inventor: YOKOYAMA, Yuta, Osaka 532-8512 (JP); NAKAGAWA, Shinichiro, Osaka 532-8512 (JP)
(74) Representative: D Young & Co LLP

(57) **Abstract**

The present application relates to a teaching tip (30), which can be removably attached to a distal end portion of a power feeding tip (22) and is an elastic body made of a resin or rubber having an insulating property. The teaching tip (30) has a base end (32) into which the distal end portion of the power feeding tip (22c) is inserted. A tip housing recessed portion is formed to be allowed to be attached and detached to/from the power feeding tip (22). The tip housing recessed portion has an abutting surface (34a) abutting on the distal end surface (22c) of the power feeding tip (22). A distance along a longitudinal direction from the abutting surface (34c) to a distal end (32b) of the teaching tip (32) is set to a specified length.

## Description

### BACKGROUND

### Technical Field

The present invention relates to a teaching tip and a welding robot with the same mounted thereon.

### Background Art

In this type of technique, in a welding robot, in a state where a wire for welding is protruded from a distal end surface of a power feeding tip to a length (a specified length) that matches welding conditions, teaching (teaching) of the welding robot is performed by moving it along a welding line of a workpiece welding location.

For example, JP-A-2014-231066 proposes a teaching tip that includes a tip main body equivalent to a power feeding tip, and a coil spring that is attached to the tip main body and through which a wire protruding from the tip main body is inserted. In teaching of a welding robot, the power feeding tip is replaced with the teaching tip and a distal end of the wire is slightly protruded from the coil spring. In this state, the welding robot is operated using a teaching pendant, and the distal end of the wire is moved to a target position along a welding line.

### SUMMARY

However, when the teaching tip disclosed in JP-A-2014-231066 is attached, the power feeding tip must be removed from a welding torch, and after the teaching of the welding robot, the power feeding tip must be attached again from the welding torch when welding is performed. In addition to this, in the teaching of the welding robot, it is likely that the wire and the coil spring are brought into contact with a workpiece, and it is assumed that a surface of the workpiece is damaged.

Exemplary embodiments relate to providing a teaching tip that can suppress damaging a surface of a workpiece in the teaching of a welding robot by an easy operation, and a welding robot with the mounted teaching tip.

In view of the above-described problem, the teaching tip according to the present invention is a teaching tip for teaching a welding robot a target position aligned with a distal end of a wire for welding that extends a specified length during welding from a distal end surface of a power feeding tip disposed in a welding torch of the welding robot. The teaching tip is removably attached to a distal end portion of the power feeding tip and is an elastic body made of a resin or rubber having an insulating property. The teaching tip comprises a base end having a tip housing recessed portion, and the distal end portion of the power feeding tip is inserted into the tip housing recessed portion. The tip housing recessed portion has an abutting surface abutting on the distal end surface of the power feeding tip. A distance along a longitudinal direction from the abutting surface to a distal end of the teaching tip is set to the specified length.

According to the present invention, by inserting the distal end portion of the power feeding tip into the tip housing recessed portion of the teaching tip, the teaching tip can be mounted to the distal end portion of the power feeding tip. This allows attaching the teaching tip to the welding torch without removing the power feeding tip. When the distal end surface of the power feeding tip is brought into contact with the abutting surface formed in the tip housing recessed portion, the distance along the longitudinal direction from the distal end surface of the power feeding tip to the distal end of the teaching tip can be set to the specified length of the wire during welding. As a result of this, without extending the wire to the specified length from the distal end surface of the power feeding tip, with a distal end position of the teaching tip as a reference, it is possible to teach (the behavior) of the welding robot in accordance with the target position of the wire distal end along the welding line. Here, since the teaching tip is an elastic body made of a resin or rubber, which has an insulating property, even when the distal end of the teaching tip is brought into contact with the workpiece during the teaching of the welding robot, it is possible to avoid damaging the surface of the workpiece with the distal end of the teaching tip.

In a more preferred aspect, a wire housing recessed portion that houses a distal end portion of the wire extending from the distal end surface of the power feeding tip is formed so as to be recessed from the abutting surface.

According to this aspect, by disposing the wire housing recessed portion in the teaching tip, it is possible to teach the welding robot in a state where the distal end portion of the wire is extended from the distal end surface of the power feeding tip. Thus, since it is only necessary that, before starting the welding, the wire is further fed by the specified length from the distal end surface of the power feeding tip, and the distal end portion of the wire is moved, it is possible to smoothly start the welding by the wire.

In a more preferred aspect, an inner diameter of the tip housing recessed portion set to be smaller than an inner diameter of the distal end portion of the power feeding tip in a state where the teaching tip is unmounted to the power feeding tip elastically deforms a sidewall portion forming the tip housing recessed portion in a state where the teaching tip is mounted to the power feeding tip.

According to this aspect, in a state where the teaching tip is mounted to the power feeding tip, since the sidewall portion forming the tip housing recessed portion is elastically deformed, the teaching tip can be easily fixed to the power feeding tip by an elastic force accompanied by this elastic deformation. Furthermore, since the teaching tip is fixed to the power feeding tip by this elastic force, the teaching tip can be easily removed from the power feeding tip by pulling out the teaching tip from the power feeding tip along an axial direction of the power feeding tip.

In a more preferred aspect, a diameter of the distal end of the teaching tip is equal to or less than an inner diameter of an insertion hole through which the wire of the power feeding tip is inserted.

According to this aspect, by setting the diameter of the distal end of the teaching tip to such a size, during visually checking the distal end of the teaching tip, it is possible to accurately teach the behavior of the welding robot in accordance with the target position of the wire distal end with the distal end of the teaching tip as a reference.

In a more preferred aspect, the teaching tip further includes a tapered portion having a diameter that decreases toward the distal end of the teaching tip. A length of the tapered portion is set to the specified length.

According to this aspect, since the specified length can be recognized while the distal end of the teaching tip is visually checked by disposing the tapered portion set to the specified length, workability of teaching the welding robot can be improved.

A welding robot according to the present invention includes an articulated robot main body and a welding torch attached to a distal end of the robot main body. The above-described teaching tip is mounted to the power feeding tip disposed in the welding torch.

According to this aspect, in a state where the above-described teaching tip is mounted to the power feeding tip disposed in the welding torch, it is possible to perform the teaching of the welding robot while the articulated robot main body is operated.

In a more preferred aspect, the welding robot further includes a teaching handle teaching a behavior of the robot main body in accordance with a position to which a distal end of the teaching tip moves by an external force applied to the distal end of the robot main body from an operator while the teaching handle is gripped by the operator.

According to this aspect, in teaching the behavior of the robot main body, the external force is applied to the distal end of the robot main body from the teaching handle gripped by the operator. In accordance with this external force, even when the distal end of the teaching tip moves unexpectedly, and the distal end of the teaching tip is brought into contact with the operator, since the teaching tip is the elastic body, safety of the operator can be ensured.

According to the present invention, in the teaching of the welding robot, it is possible to suppress damaging a surface of a workpiece.

### BRIEF DESCRIPTION OF THE DRAWINGS

Fig. 1 is a schematic perspective view of a welding robot viewed from the front in which a teaching tip according to an embodiment of the present invention is mounted to a welding torch;
Fig. 2A is a cross-sectional view of the welding torch of the welding robot illustrated in Fig. 1 during welding, and Fig. 2B is a cross-sectional view of the welding torch when the teaching tip is mounted during teaching;
Fig. 3A is a schematic perspective view of the teaching tip viewed from above, and Fig. 3B is a perspective view of the teaching tip illustrated in Fig. 3A viewed from below;
Fig. 4A is an enlarged cross-sectional view in a state where the teaching tip is mounted, and Fig. 4B is a cross-sectional view in which the teaching tip is removed from the welding torch from the state illustrated in Fig. 4A; and
Fig. 5A is an enlarged cross-sectional view of a state in which a teaching tip according to a modification is mounted, and Fig. 5B is a schematic perspective view of the teaching tip illustrated in Fig. 5A viewed from above.

### DETAILED DESCRIPTION

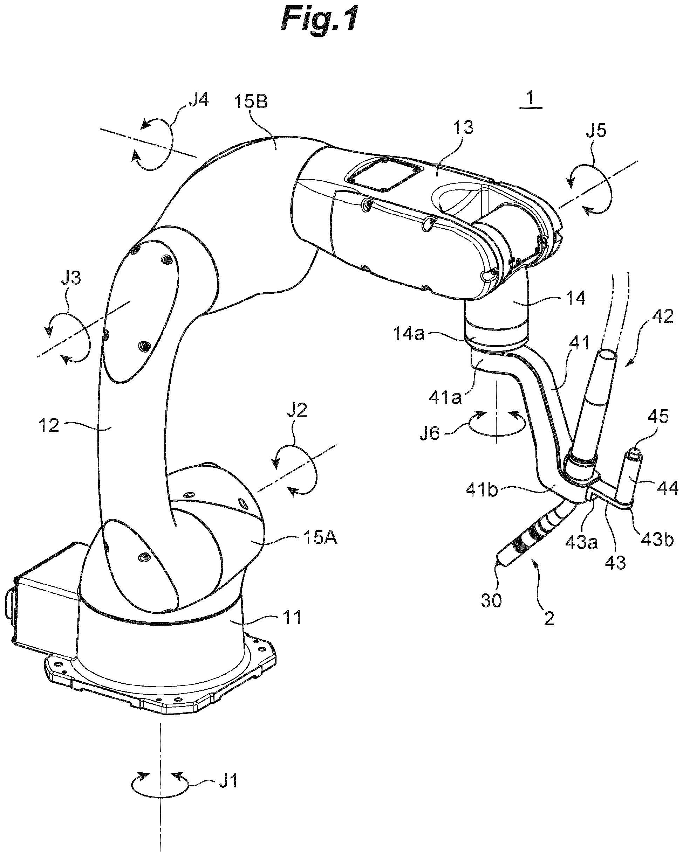

The followings will describe a welding robot 1 according to an embodiment of the present invention by referring to Figs. 1 to 5B.

### 1. Regarding the welding robot 1

As illustrated in Fig. 1, the welding robot 1 includes an articulated robot main body 10, a welding torch 2 that is attached to a support arm 14 of the robot main body 10 via a first bracket 41, and a teaching handle 44 that is attached to the first bracket 41 via a second bracket 43. The welding torch 2 corresponds to an end effector of the robot main body 10. In Fig. 1, a teaching tip 30 is mounted to a distal end portion of the welding torch 2.

In this embodiment, the welding robot 1 is a human cooperative type robot configured to behave near a worker. Specifically, the welding robot 1 has a direct teaching function in which an operator as the worker teaches a welding operation. Specifically, the direct teaching function is a function that teaches a welding behavior to the robot main body 10 while a posture of the robot main body 10 is changed by directly applying an external force (an operating force) from an operator to a distal end of the robot main body 10 via the teaching handle 44 in a state where the operator grips the teaching handle 44. In addition to this, the welding robot 1 has a function in which the worker performs manual welding using the teaching handle 44 before performing main welding by the welding robot 1.

### 2. Regarding the robot main body 10

As illustrated in Fig. 1, the robot main body 10 includes a base 11, and the base 11 is rotated around a first axis J1 by a built-in first motor (not illustrated). The robot main body 10 includes a lower arm 12, a base end of which is pivotally attached to the base 11 via a joint portion 15A, an upper arm 13 that is pivotally attached to a distal end of the lower arm 12 via a joint portion 15B, and the support arm 14 that is pivotally attached to a distal end of the upper arm 13.

The lower arm 12 is connected to the base 11 via a second motor (not illustrated) built in the joint portion 15A and is pivotally attached to the base 11 so as to be turnable around a second axis J2. The upper arm 13 is connected to the lower arm 12 via a third motor and a fourth motor (not illustrated) built in the joint portion 15B. The upper arm 13 is pivotally attached to the lower arm 12 so as to be turnable around a third axis J3 and a fourth axis J4 perpendicular to the third axis J3. Thus, the base 11, the lower arm 12, and the upper arm 13 can be turned around the first to fourth axes J1 to J4 by the power of the first to fourth motors. Decelerators are attached to respective output shafts of the first to fourth motors, and first to fourth torque sensors that detect the torques around the first axis J1 to the fourth axis J4 are attached to the output shafts of the decelerators.

The distal end of the upper arm 13 is a portion that corresponds to a wrist portion of the robot main body 10, and the support arm 14 for supporting the welding torch 2 is attached to the distal end of the upper arm 13. Specifically, the support arm 14 is pivotally attached to a distal end portion of the upper arm 13 so as to be turnable around a fifth axis J5 perpendicular to the fourth axis J4 and is turnable around a sixth axis J6 along a longitudinal direction.

The upper arm 13 includes a built-in fifth motor (not illustrated) that pivots the support arm 14 relative to the upper arm 13. The fifth motor is connected to the support arm 14 via a power transmission belt or the like built in the upper arm 13. Thus, by the power of the fifth motor being transmitted to the power transmission belt built in the upper arm 13, the support arm 14 turns (swings) relative to the upper arm 13 around the fifth axis J5. Furthermore, the upper arm 13 includes a built-in sixth motor (not illustrated), and the sixth motor is connected to the support arm 14 via the power transmission belt and a bevel gear (not illustrated). Thus, by driving of the sixth motor, a distal end portion (the main body portion) of the support arm 14 can be turned around an axial center (specifically, the sixth axis J6). Here, in the welding robot 1, while the torque around the fifth axis J5 and the sixth axis J6 may be measured by a torque sensor, for example, the torque may be estimated by a control device (not illustrated) from a current flowing through the fifth motor and the sixth motor.

The welding robot 1 further includes a feeding device, the control device, and a welding machine or the like, which are not illustrated. The control device controls the behavior of the welding robot 1 by controlling the driving of the first to sixth motors. The control device performs the control of the welding robot 1 by performing (1) the control of the welding behavior of the robot main body 10, (2) the control of a feeding speed of the feeding device that feeds a wire W for welding to the welding torch 2, (3) the control of an applied voltage for welding applied to the welding torch 2, (4) the control of a supply timing of a shield gas supplied to the welding torch 2, and the like. More specifically, as the control of the welding robot 1, the control device performs the control of the manual welding of the welding robot 1 for executing the welding such as a tack welding using the teaching handle 44 by an operator, the control of the teaching of the welding robot 1 for performing the teaching by an external operation (an operation by an external force) using the teaching handle 44, the control of automatic welding of the welding robot 1 in accordance with taught behavior, and the like.

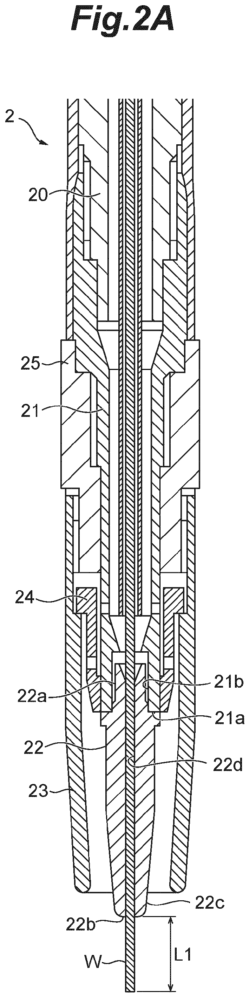

As illustrated in Fig. 1, the welding torch 2 is attached to a distal end portion 14a of the support arm 14 of the robot main body 10 via the first bracket 41. A base end portion 41a of the first bracket 41 is fixed to the support arm 14 with a fixing tool such as a screw, and the welding torch 2 and a single-wire type power cable (a torch cable) 42 are supported at a distal end portion 41b of the first bracket 41. The wire W (see Fig. 2A) for welding is guided and fed from a feeding device to the welding torch 2 by the power cable 42 (namely, the torch cable). Furthermore, power is supplied from the welding machine to the welding torch 2 via the power cable 42, and the shield gas is supplied from a gas cylinder to the welding torch 2 via the power cable.

The teaching handle 44 is attached to the distal end portion 41b of the first bracket 41 via the second bracket 43. The teaching handle 44 is a member that teaches the behavior of the robot main body 10 by the external force applied from the operator to the distal end of the robot main body 10 in a state of being gripped by the operator. One end 43a of the second bracket 43 is fixed with a fixing tool such as a screw to the distal end portion 41b of the first bracket 41, and the second bracket 43 is removed from the first bracket 41 during automatic welding. The teaching handle 44 is fixed to the other end 43b of the second bracket 43 so as to extend upward. An operation switch 45 is disposed to the teaching handle 44.

The operation switch 45 is a switch that allows movableness of the robot main body 10 by the external force with respect to the robot main body 10 with the restricted movableness. The above-described first to sixth motors are attached to the robot main body 10, and the first to sixth motors are mechanically or electrically locked in a state where the operation switch 45 is not pressed (OFF state). In a state where the operation switch 45 is pressed (ON state), the mechanical or electrical locks of the first to sixth motors are released. Here, the unlocking may be set to continue by continually pressing the operation switch 45, or the locking and the unlocking may be set to be switched by pressing the operation switch 45 once. Thus, the restriction (lock) on the movableness of the robot main body 10 is released, and the movableness of the robot main body 10 is allowed.

### 3. Regarding the welding torch 2

As illustrated in Fig. 2A, a tip body 21 is mounted to a torch body 20 of the welding torch 2. A power feeding tip 22 is mounted to a distal end 21a of the tip body 21. The power feeding tip 22 has a substantially cylindrical shape and has a male threaded portion 22a formed at a base end. In the power feeding tip 22, the male threaded portion 22a is removably screwed into a female screw hole 21b of the distal end 21a of the tip body 21.

An insertion hole 22d having a circular cross section for inserting the wire W is formed in a central axis portion of the power feeding tip 22. By the wire W inserted through the insertion hole 22d being inscribed with the power feeding tip 22, the electric power of the welding machine is supplied to the wire W, and a voltage is applied between the wire W and a workpiece (not illustrated). An insulation bush 25 is mounted around a central portion of the tip body 21.

An orifice 24 that is arranged so as to substantially cover the power feeding tip 22 and a distal end peripheral surface of the tip body 21 is attached to the distal end 21a of the tip body 21. A nozzle 23 surrounding the power feeding tip 22 and the orifice 24 is attached to the insulation bush 25. A flange surface on an upper end side of the orifice 24 abuts on a stepped portion on an inner surface of the nozzle 23.

The shield gas supplied from the gas cylinder is ejected into the inside of the nozzle 23 through an ejection hole formed in the orifice 24, which is disposed around a distal end portion of the tip body 21, via respective through-holes of the torch body 20 and the tip body 21 that also serve as a gas passage and through which the wire is inserted. The gas ejected from the orifice 24 passes through an outer peripheral surface of the power feeding tip 22 and an inner peripheral surface of the nozzle 23 and is ejected from a distal end opening of the nozzle 23, resulting in shielding arc, a molten pool, and its periphery from nitrogen and oxygen in the atmosphere.

Now, in performing welding with the welding robot 1, as welding conditions, a state where the wire W is extended by a specified length L1 from a distal end surface 22b of the power feeding tip 22 disposed on the welding torch 2 of the welding robot 1 is maintained. While these welding conditions are satisfied, the welding robot 1 is moved to a target position along the welding line at a workpiece welding location, and, during melting the distal end of the wire W, the consumed amount of wire W is fed to the welding torch 2 by the feeding device. Accordingly, in teaching the behavior of the welding robot 1, with a position of the specified length L1 from the distal end surface 22b of the power feeding tip 22 being set as a reference position, while this reference position is maintained, teaching of the behavior of the welding robot 1 is performed in accordance with the target position of the distal end of the wire W during welding.

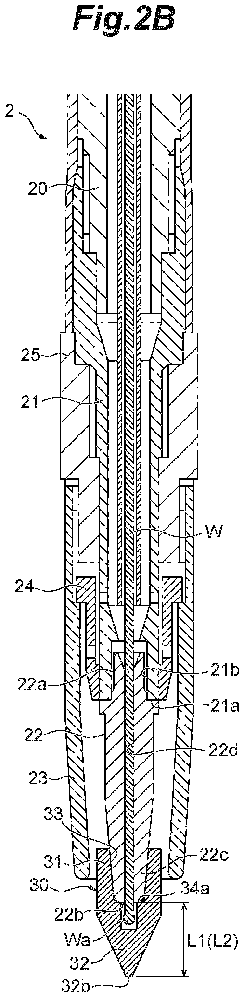

From this point of view, in this embodiment, as illustrated in Fig. 2B, the welding robot 1 includes the teaching tip 30. The teaching tip 30 is a member for teaching the welding robot 1 the target position aligned with the distal end of the wire W for welding extending from the distal end surface 22b of the power feeding tip 22 disposed in the welding torch 2 of the welding robot 1 by the specified length L1 during welding. The following will describe the teaching tip 30 by referring to Figs. 2A to 5B.

The teaching tip 30 is a member that is removably attached to a distal end portion 22c of the power feeding tip 22. The teaching tip 30 is an elastic body made of a resin or rubber, which has an insulating property. The teaching tip 30 covers the entire distal end surface 22b of the power feeding tip 22. Accordingly, a distal end portion Wa of the wire W protruding from the power feeding tip 22 is unexposed from the teaching tip 30. Examples of the resin having the insulating property include, for example, a polystyrene resin, a polyurethane resin, a nylon resin, or a polycarbonate resin, and the like. Examples of rubber having the insulating property include, for example, natural rubber, isoprene rubber, butadiene rubber, silicone rubber, urethane rubber, or fluorine-containing rubber, and the like.

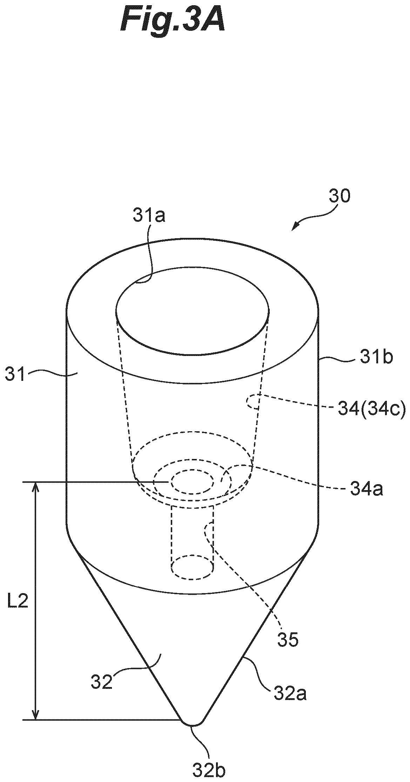

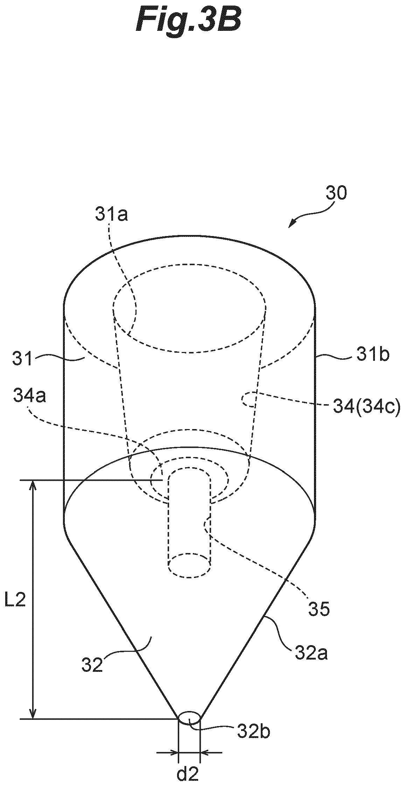

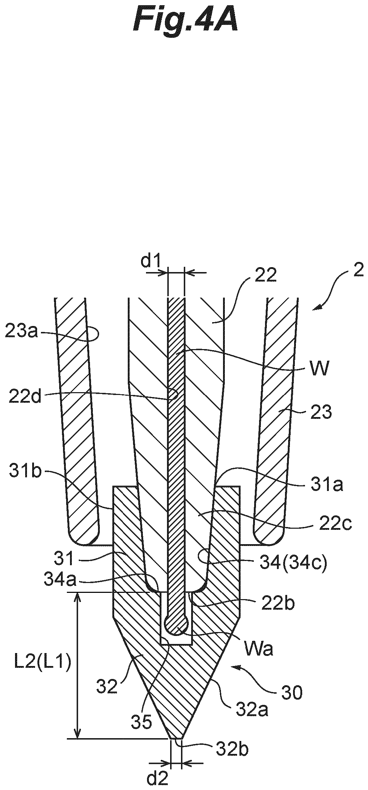

As illustrated in Figs. 3A and 3B, the teaching tip 30 includes a mounting portion 31 to which the distal end portion 22c of the power feeding tip 22 is mounted and a tapered portion 32 having a diameter that decreases toward a distal end 32b of the teaching tip 30 from the mounting portion 31. The distal end portion 22c of the power feeding tip 22 is inserted into a base end (the mounting portion 31) of the teaching tip 30 where a tip housing recessed portion 34 is formed to be allowed to be attached and detached to/from the power feeding tip 22. As illustrated in Fig. 2B and Fig. 4A, an abutting surface 34a that abuts on the distal end surface 22b of the power feeding tip 22 is formed on the tip housing recessed portion 34. The tip housing recessed portion 34 is formed in accordance with a shape of the distal end portion 22c of the power feeding tip 22. Accordingly, the tip housing recessed portion 34 is an inverted truncated cone-shaped depression, and a central axis of the tip housing recessed portion 34 coincides with an axial center (a center line of the insertion hole 22d) of the power feeding tip 22. In a state where the teaching tip 30 is mounted, an outer peripheral surface of the distal end portion 22c of the power feeding tip 22 abuts on an inner peripheral surface 34c of the tip housing recessed portion 34.

Furthermore, in the teaching tip 30, a distance L2 along the longitudinal direction from the abutting surface 34a to the distal end 32b of the teaching tip 30 is set to the specified length L1. Accordingly, during teaching, in a state where the teaching tip 30 is mounted to the distal end portion 22c of the power feeding tip 22, a position of the distal end 32b of the teaching tip 30 relative to the distal end surface 22b of the power feeding tip 22 can be aligned with a reference position of the distal end of the wire W during welding. The "reference position" here refers to the position of the distal end of the wire W that extends by the specified length L1 from the distal end surface 22b of the power feeding tip 22 in the welding conditions. The above-described "target position" refers to the position of the distal end of the wire W relative to the welding line of the workpiece during welding, and a plurality of target positions are set in the teaching.

In this embodiment, a wire housing recessed portion 35 that houses the distal end portion Wa of the wire W extending from the distal end surface 22b of the power feeding tip 22 is formed so as to be recessed from the abutting surface 34a. The wire housing recessed portion 35 is a column-shaped recess formed at a center of the abutting surface 34a. A diameter (an inner diameter) of the wire housing recessed portion 35 is larger than a diameter of the wire W. Thus, even when the distal end portion Wa of the wire W after welding has a spherical shape larger than the diameter of the wire W, this distal end portion Wa can be housed.

Thus, by disposing the wire housing recessed portion 35 in the teaching tip 30, the welding robot 1 can be taught in a state where the distal end portion Wa of the wire W is extended from the distal end surface 22b of the power feeding tip 22. In view of this, since it is only necessary that, before starting the welding, the wire W is further fed until it reaches the specified length L1 from the distal end surface 22b of the power feeding tip 22 so as to be changed from the state illustrated in Fig. 2B to the state illustrated in Fig. 2A, and then the distal end portion Wa of the wire W is moved, it is possible to smoothly start the welding using the wire W.

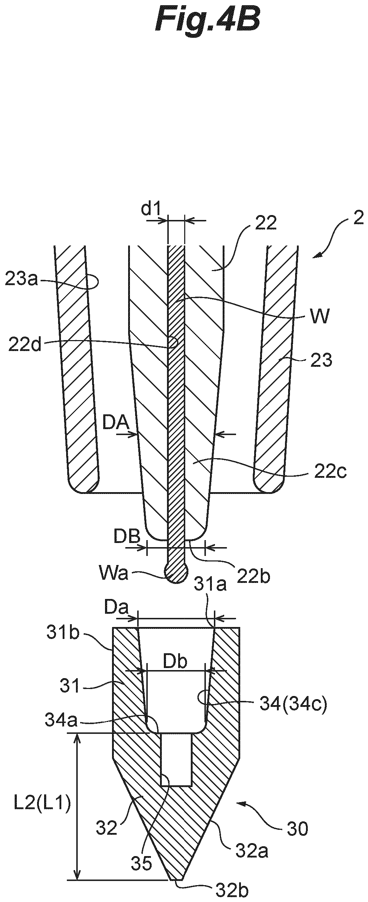

Furthermore, in this embodiment, as illustrated in Fig. 4B, in a state where the teaching tip 30 is unmounted with respect to the power feeding tip 22, an inner diameter Da (Db) of the tip housing recessed portion 34 is set to be smaller than an inner diameter DA (DB) of the distal end portion 22c of the power feeding tip 22. Specifically, the inner diameter (the diameter) Da of an opening 31a of the tip housing recessed portion 34 is smaller than the diameter DA on the base end side of the distal end portion 22c of the power feeding tip 22, and the inner diameter (the diameter) Db of the abutting surface 34a of the tip housing recessed portion 34 is smaller than the diameter DB of the distal end surface 22b of the power feeding tip 22. These diameters proportionally (gradiently) change toward the distal end side of the power feeding tip 22 and the teaching tip 30 along an axial direction. Thus, in a state where the teaching tip 30 is mounted with respect to the power feeding tip 22, a sidewall portion 31b forming the tip housing recessed portion 34 is elastically deformed.

From such a result, by the elastic force accompanied by this elastic deformation, the distal end portion 22c of the power feeding tip 22 is tightened to the sidewall portion 3 1b, and the teaching tip 30 can be easily fixed to the power feeding tip 22 (see Fig. 4A). Furthermore, since the teaching tip 30 is fixed to the power feeding tip 22 by this elastic force, the teaching tip 30 can be easily removed from the power feeding tip 22 by pulling out the teaching tip 30 from the power feeding tip 22 along the axial direction of the power feeding tip 22 (see Fig. 4B).

As illustrated in Fig. 4A, a diameter d2 of the distal end 32b of the teaching tip 30 is equal to or less than an inner diameter d1 of the insertion hole 22d through which the wire W of the power feeding tip 22 is inserted. As described above, the teaching tip 30 includes the tapered portion 32 having the diameter that decreases toward the distal end 32b of the teaching tip 30, and an outer peripheral surface 32a of the tapered portion 32 has a cone-shaped surface. Furthermore, the length of the tapered portion 32 is set to the specified length L1.

By setting the diameter d2 of the distal end 32b of the teaching tip 30 to such a size, while the distal end 32b of the teaching tip 30 is visually confirmed, it is possible to accurately teach (the behavior of) the welding robot 1 with the distal end position of the teaching tip 30 as a reference. In particular, since it is possible to recognize the specified length L1 while the distal end 32b of the teaching tip 30 is visually confirmed by disposing the tapered portion 32 set to the specified length L1, workability of teaching the welding robot 1 can be improved.

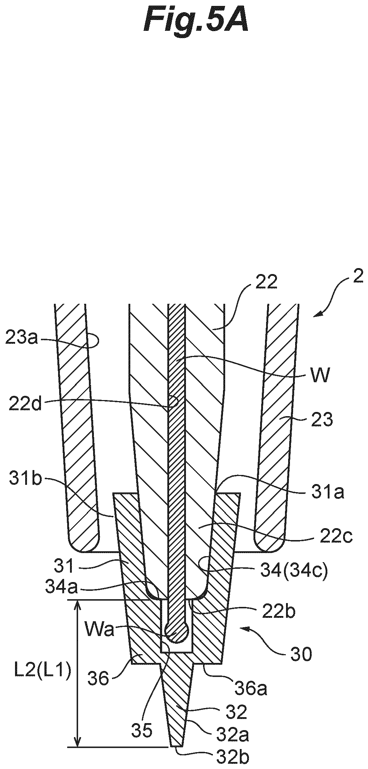

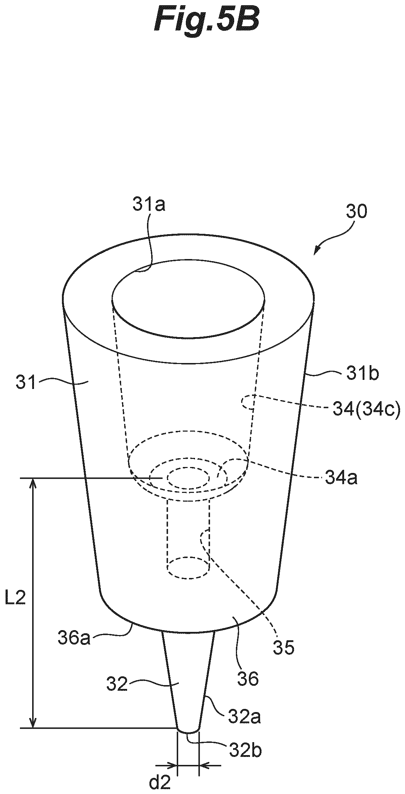

In view of this point, for example, a teaching tip 30 according to a modification illustrated in Fig. 5A and Fig. 5B may be used. In this teaching tip 30, a truncated cone-shaped mounting portion 31 and a tapered portion 32 are integrated via a stepped portion 36. The stepped portion 36 is formed by making a diameter of a base end of the tapered portion 32 smaller than a diameter of an end surface 36a on a distal end side of the mounting portion 31. According to such a teaching tip 30, the tapered portion 32 has a smaller diameter than that illustrated in Figs. 3A and 4A. In view of this, it becomes easier to visually confirm the distal end 32b of the teaching tip 30, and as a result, the workability of teaching the welding robot 1 can be further improved.

### 4. Regarding teaching of the welding robot 1

The following will describe the teaching of the welding robot in the automatic welding using the welding robot 1 together with its effects. In this embodiment, by inserting the distal end portion 22c of the power feeding tip 22 into the tip housing recessed portion 34 of the teaching tip 30, the teaching tip 30 is mounted to the distal end portion 22c of the power feeding tip 22. This allows the teaching tip 30 to be easily attached to the welding torch 2 without removing the power feeding tip 22. When the distal end surface 22b of the power feeding tip 22 is brought into contact with the abutting surface 34a formed in the tip housing recessed portion 34, the distance L2 along the longitudinal direction from the distal end surface 22b of the power feeding tip 22 to the distal end 32b of the teaching tip 30 can be set to the specified length L1 of the wire W during welding. As a result of this, without extending the wire W having the specified length L1 from the distal end surface 22b of the power feeding tip 22, the behavior of the welding robot 1 (specifically, the robot main body 10) can be taught with the position of the distal end 32b of the teaching tip 30 as a reference and in accordance with the target position of the distal end of the wire W along the welding line.

In this embodiment, in teaching, when the operation switch 45 is continually pressed, the mechanical or electrical unlocking of the first to sixth motors is continued. With this, while gripping the teaching handle 44, an operator moves the distal end 32b of the teaching tip 30 along the welding line while changing the posture of the robot main body 10 by the external force (the operating force) from the teaching handle 44 in accordance with the welding behavior. Specifically, as described above, the above-described control device controls the driving of the first to sixth motors of the robot main body 10 corresponding to the signals detected from the above-described torque sensor, a force sensor, or the like by the external force from the teaching handle 44. At this time, the rotational positions of the first to sixth motors are calculated based on detection signals from encoders (not illustrated) of the first to sixth motors. This allows the operator to teach the welding behavior of the robot main body 10.

Here, since the teaching tip 30 is an elastic body made of a resin or rubber, which has an insulating property, in teaching the welding robot 1, even when the distal end 32b of the teaching tip 30 is brought into contact with a workpiece, the distal end 32b of the teaching tip 30 is elastically deformed. In view of this, it is possible to avoid damaging the surface of the workpiece with the distal end 32b of the teaching tip 30. Furthermore, even when the distal end of the teaching tip 30 moves unexpectedly due to the external force applied to the distal end of the robot main body 10 from the teaching handle 44 gripped by the operator, and the distal end of the teaching tip 30 is brought into contact with the operator, since the teaching tip 30 is an elastic body, safety of the operator can be ensured.

While the embodiments of the present invention has been described in detail above, the present invention is not limited to the above embodiments, and various design changes can be made without departing from the spirit of the invention described in the claims.

In the embodiments, while the welding robot is a welding robot that teaches the welding behaviors to the robot main body with the teaching handle, for example, as long as the teaching tip can be mounted to the welding torch, the welding robot may be a welding robot that teaches the welding behaviors to the robot main body with a teaching pendant. Furthermore, in the embodiments, while the distal end of the teaching tip is a flat end surface, for example, the end surface may be pointed, or the end surface may be rounded.

### DESCRIPTION OF SYMBOLS

- 1: Welding robot
- 2: Welding torch
- 10: Robot main body
- 22: Power feeding tip
- 22b: Distal end surface
- 22c: Distal end portion
- 22d: Insertion hole
- 30: Teaching tip
- 31b: Sidewall portion
- 32: Tapered portion
- 32b: Distal end
- 34: Tip housing recessed portion
- 34a: Abutting surface
- 35: Wire housing recessed portion
- 44: Teaching handle
- W: Wire
- Wa: Distal end portion

## Claims

1. A teaching tip for teaching a welding robot a target position aligned with a distal end of a wire for welding that extends a specified length during welding from a distal end surface of a power feeding tip disposed in a welding torch of the welding robot, wherein
the teaching tip is removably attached to a distal end portion of the power feeding tip and is an elastic body made of a resin or rubber having an insulating property,
the teaching tip comprises a base end having a tip housing recessed portion, and the distal end portion of the power feeding tip is inserted into the tip housing recessed portion, wherein
the tip housing recessed portion has an abutting surface abutting on the distal end surface of the power feeding tip, and
a distance along a longitudinal direction from the abutting surface to a distal end of the teaching tip is set to the specified length.

2. The teaching tip according to claim 1, wherein
a wire housing recessed portion that houses a distal end portion of the wire extending from the distal end surface of the power feeding tip is formed so as to be recessed from the abutting surface.

3. The teaching tip according to claim 1, wherein
an inner diameter of the tip housing recessed portion set to be smaller than an inner diameter of the distal end portion of the power feeding tip in a state where the teaching tip is unmounted to the power feeding tip elastically deforms a sidewall portion forming the tip housing recessed portion in a state where the teaching tip is mounted to the power feeding tip.

4. The teaching tip according to claim 1, wherein
a diameter of the distal end of the teaching tip is equal to or less than an inner diameter of an insertion hole through which the wire of the power feeding tip is inserted.

5. The teaching tip according to claim 4, further comprising
a tapered portion having a diameter that decreases toward the distal end of the teaching tip,
wherein a length of the tapered portion is set to the specified length.

6. A welding robot comprising:
an articulated robot main body; and
a welding torch attached to a distal end of the robot main body,
wherein the teaching tip according to claim 1 is mounted to the power feeding tip disposed in the welding torch.

7. The welding robot according to claim 6, further comprising
a teaching handle teaching a behavior of the robot main body in accordance with a position to which a distal end of the teaching tip moves by an external force applied to the distal end of the robot main body from an operator while the teaching handle is gripped by the operator.
